# EUROPÄISCHE PATENTSCHRIFT

(11) **EP 1 338 453 B1**
(45) Veröffentlichungstag und Bekanntmachung des Hinweises auf die Patenterteilung: **16.11.2005**
(21) Anmeldenummer: 03001471.6
(22) Anmeldetag: 23.01.2003
(51) Int. Cl.: B60J 7/185

(54) **Verschluss- und Zentriereinrichtung für ein öffnungsfähiges Verdeck für ein Kraftfahrzeug**
Locking and centering device for an openable roof for a motor vehicle
Dispositif de verrouillage et centrage pour un toit de véhicule ouvrant

(30) Priorität: 22.02.2002 DE 10207457
(43) Veröffentlichungstag der Anmeldung: 27.08.2003
(73) Patentinhaber: Dr.Ing. h.c.F. Porsche Aktiengesellschaft, 70435 Stuttgart (DE)
(72) Erfinder: Pfertner, Kurt, 71254 Ditzingen (DE); Ranft, Detlev, 76337 Waldbronn-Reichenbach (DE); Fischer, Thomas, 72074 Tübingen (DE); Czechtizky, Timo, 73061 Ebersbach-Rosswälden (DE)

(56) Entgegenhaltungen:
- EP-A- 0 657 607
- EP-A- 0 965 711
- DE-C- 3 924 295

## Beschreibung

Bei der Erfindung wird ausgegangen von einer Verschluss- und Zentriereinrichtung für ein in Schließstellung und Ablagestellung verlagerbares Verdeck für ein Kraftfahrzeug, gemäß Oberbegriff des Anspruchs 1.

Die DE 196 02 185 C1 beschreibt eine Verschluss- und Zentriereinrichtung. Beispielsweise in Fig. 4 dieser DE 196 02 185 C1 ist die Verschlusseinrichtung gezeigt. Sie besitzt wenigstens ein zwischen einem aufbauseitigen Rahmen, beispielsweise Windschutzscheibenrahmen, und dem Verdeck wirkendes bewegbares Riegelelement, das als verschwenkbarer Haken ausgebildet ist, der an dem aufbauseitigen Rahmen angreift. In Fig. 2 dieser DE 196 02 185 C1 ist die Zentriereinrichtung dargestellt, die zwischen dem Rahmen und dem Verdeck wirkt und dafür ein Zentrierelement und ein Gegenzentrierelement besitzt. Zentrier- und Gegenzentrierelement sind mit seitlichem Abstand zum Riegelelement angeordnet, wodurch eine Relativdrehung des Verdecks bezüglich des Rahmens verhindert werden soll, wenn im Betrieb des Kraftfahrzeugs der Aufbau, beispielsweise aufgrund von Fahrbahnunebenheiten, einer Torsion um die Fahrzeuglängsachse unterliegt. Die bekannte Verschluss- und Zentriereinrichtung hat sich in der Praxis gut bewährt, jedoch hat sich gezeigt, dass insbesondere an der Zentriereinrichtung noch Verbesserungen möglich sind.

Aus der gattungsbildenden EP 0 965 711 A1 ist eine Verschluss- und Zentriereinrichtung für ein in Schließstellung und Ablagestellung verlagerbares Verdeck bekannt. Die Verschlusseinrichtung besitzt wenigstens ein Riegelelement, das bewegbar ist und zwischen dem Verdeck und einem aufbauseitigen Rahmen wirkt. Die Zentriereinrichtung umfasst wenigstens ein zwischen Rahmen und Verdeck wirkendes Zentrierelement und Gegenzentrierelement. Das Zentrierelement ist als im Querschnitt zusammenziehbares Ringelement ausgeführt ist, in das das als Zapfen realisiertes Gegenzentrierelement eingreift. In Schließstellung des Verdecks wird so der Zapfen innerhalb des Ringelements gehalten. Das Ringelement als Ganzes ist also verformbar und nimmt in Schließstellung des Verdecks seine Wirkstellung ein und umgreift dabei den Zapfen.

Es ist daher Aufgabe der Erfindung, eine Verschluss- und Zentriereinrichtung der eingangs genannten Art zu schaffen, die eine Drehung des Verdecks relativ zum Rahmen wirkungsvoll und auf einfache Weise verhindert.

Gelöst wird diese Aufgabe mit einer Verschluss- und Zentriereinrichtung, die die in Anspruch 1 genannten Merkmale aufweist. Weitere, die Erfindung ausgestaltende Merkmale sind in den Unteransprüchen angegeben.

Die mit der Erfindung hauptsächlich erzielten Vorteile sind darin zu sehen, dass durch das Verformen des Abschnitts am Zentrierelement dieses mit dem Gegenzentrierelement verkeilt bzw. verklemmt ist, wodurch zwischen Zentrierelement und Gegenzentrierelement kein Spiel vorhanden ist und so das vorstehend erwähnte Relativdrehen des Verdecks bezüglich des Rahmens zuverlässig verhindert ist. Dadurch wird einerseits die Abdichtung zwischen Verdeck und Rahmen verbessert, und andererseits werden durch das feste Halten des Verdecks am Rahmen Geräusche, beispielsweise Klappern, während der Fahrt zumindest vermindert. Außerdem ist vorteilhaft, dass das Zentrierelement besonders einfach mit dem Gegenzentrierelement in Eingriff gebracht werden kann, da der verformbare Abschnitt erst danach in Wirkstellung verlagerbar ist, in welcher Wirkstellung das Verklemmen bzw. Verkeilen dadurch erreicht wird, dass der Zentrierzapfen im Querschnitt aufweitbar ist und so in Wirkstellung mit der Zapfenaufnahme zusammenwirkt.

Gemäß eines besonders bevorzugten Ausführungsbeispiels entsprechend Anspruch 4 erfolgt in günstiger Weise das Zentrieren des Verdecks bezüglich des Rahmens in Abhängigkeit der Bewegung des Riegelelements der Verschlusseinrichtung, was einerseits die Handhabung des Verschluss- und Zentrierelements vereinfacht und andererseits die Zentrierung selbst verbessert, insbesondere dann, wenn der verformbare Abschnitt in Wirkstellung gebracht wird, kurz bevor das Riegelelement seine vollständige Verriegelungsposition eingenommen hat. Vorzugsweise kann diese Wirkstellung während des letzten Drittels der Bewegung des Riegelelements vor seiner Verriegelungsposition angesteuert werden.

Ein Ausführungsbeispiel gemäß Anspruch 6 zeichnet sich durch zwei schwenkbeweglich aneinander befestigte Klappenelemente auf, die als verformbarer Abschnitt auseinander klappbar sind, um den verformbaren Abschnitt in Wirkstellung zu bringen.

Für das Auseinanderklappen bzw. Spreizen der Klappenelemente können diese und/oder das Betätigungselement eine Auflaufschräge (Anspruch 7) besitzen, so dass bei einer Relativbewegung des Betätigungselements bezüglich der Klappenelemente diese in Wirkstellung verlagert werden.

Bei einer Weiterbildung gemäß Anspruch 9 ergibt sich eine besonders kompakte Ausführungsform der Zentriereinrichtung.

In Anspruch 10 ist eine weitere Ausführungsvariante des verformbaren Abschnitts angegeben, der sich durch einen einfachen Aufbau und einen Toleranzausgleich auszeichnet, insbesondere was Toleranzen zwischen Zentrierelement und Gegenzentrierelement betrifft.

Bei einer Ausführungsform gemäß Anspruch 11 wird hinsichtlich der Anordnung des Betätigungselements und des verformbaren Abschnitts eine besonders kompakte Bauform erreicht.

Das Aufweiten bzw. Spreizen des elastisch verformbaren Abschnitts wird auf einfache Art und Weise mit einem am Betätigungselement angeordneten Pilzzapfen erzielt, der den elastisch verformbaren Abschnitt beaufschlagt und dadurch im Querschnitt verändert, wie dies in Anspruch 12 angegeben ist.

Das Verklemmen bzw. Verkeilen des Zentrierelements gegenüber dem Gegenzentrierelement kann durch einen Kraft- und/oder Formschluss zwischen diesen beiden Elementen erreicht werden, wie dies in Anspruch 15 enthalten ist. Bei einem Formschluss erscheint vorteilhaft, dass neben der Verschlusseinrichtung mit der Zentriereinrichtung ein Verriegeln des Verdecks am Rahmen möglich ist. Ggf. könnte deshalb auf die Verschlusseinrichtung mit dem separaten Riegelelement verzichtet werden, so dass die Zentriereinrichtung sowohl dass Verriegeln als auch das Zentrieren übernimmt.

Die Erfindung wird nachfolgend anhand von Ausführungsbeispielen mit Bezug auf die Zeichnung näher erläutert.

Es zeigen:
- Fig. 1: ausschnittweise ein Kraftfahrzeug mit einem Verdeck,
- Fig. 2: eine Verschlusseinrichtung des Verdecks gemäß Fig. 1 und
- Fig. 3 - 8: jeweils ein Ausführungsbeispiel einer Zentriereinrichtung des Verdecks gemäß Fig. 1.

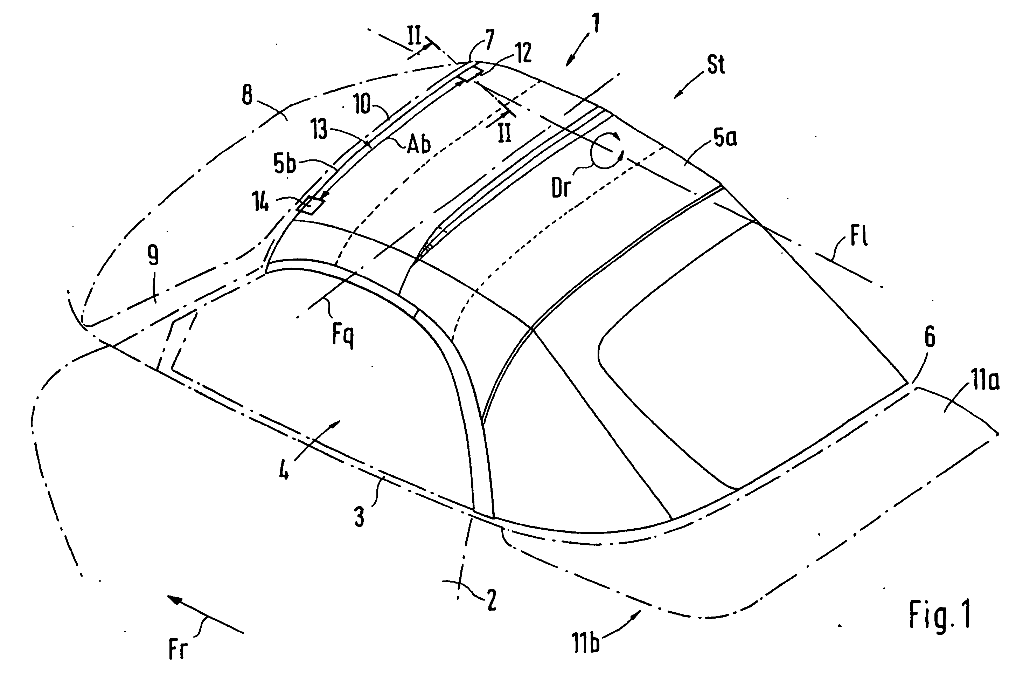

In Fig. 1 ist ein Kraftfahrzeug 1 teilweise gezeigt, das einen Fahrzeugaufbau 2 unterhalb einer Gürtellinie 3 und darüber ein Verdeck 5a aufweist, das einen Fahrgastraum 4 nach oben verschließt und in Fig. 1 in Schließstellung St vorliegt, also sich von einem Fahrzeugheckbereich 6 bis zu einem vorderen aufbauseitigen Rahmen 7 erstreckt. Dieser Rahmen 7 wird beispielsweise durch den einen Frontscheibe 8 umgebenden Windschutzscheibenrahmen gebildet, von dem hier lediglich eine der A - Säulen 9 und ein Windschutzscheibenrahmenquerteil 10 gezeigt sind. An dem Rahmenquerteil 10 liegt das vordere Ende 5b des Verdecks 5a an. In Fig. 1 ist von dem Kraftfahrzeug 1 - in Fahrtrichtung Fr gesehen - die linke Fahrzeugseite zu sehen.

Soll das Verdeck 5a in Ablagestellung bewegt werden, wird ein heckseitiger Verdeckkastendeckel 11a geöffnet, der einen darunter liegenden Verdeckkasten 11b freigibt, in den das Verdeck 5a abgelegt werden kann. Bevor das Verdeck 5a aus der Schließstellung St in die Ablagestellung verbracht werden kann, wird eine zwischen Rahmen 7, insbesondere Rahmenquerteil 10, und Verdeck 5a wirkende Verschlusseinrichtung 12 geöffnet bzw. entriegelt, die den vorderen Verdeckteil 13 mit seinem vorderen Ende 5b fest am Rahmen 7 hält. Die Verschlusseinrichtung 12 kann mittig am vorderen Verdeckteil 13 als Zentralverschluss vorgesehen sein, so dass daneben eine zwischen Rahmen 7, insbesondere dessen Rahmenquerteil 10, und Verdeck 5a, insbesondere vorderem Ende 5b, wirkende Zentriereinrichtung 14 Platz findet, die mithin mit Abstand Ab zur Verschlusseinrichtung 12 liegt, wobei dieser Abstand Ab entlang der Fahrzeugquerachse Fq gemessen und vorzugsweise so gewählt ist, dass die Zentriereinrichtung 14 nahe zur A-Säule 9 liegt. Selbstverständlich kann an der hier nicht widergegebenen Fahrzeugseite, also - in Fahrtrichtung Fr gesehen - rechts neben der Verschlusseinrichtung 12 eine weitere Zentriereinrichtung ggf. mit Abstand liegen.

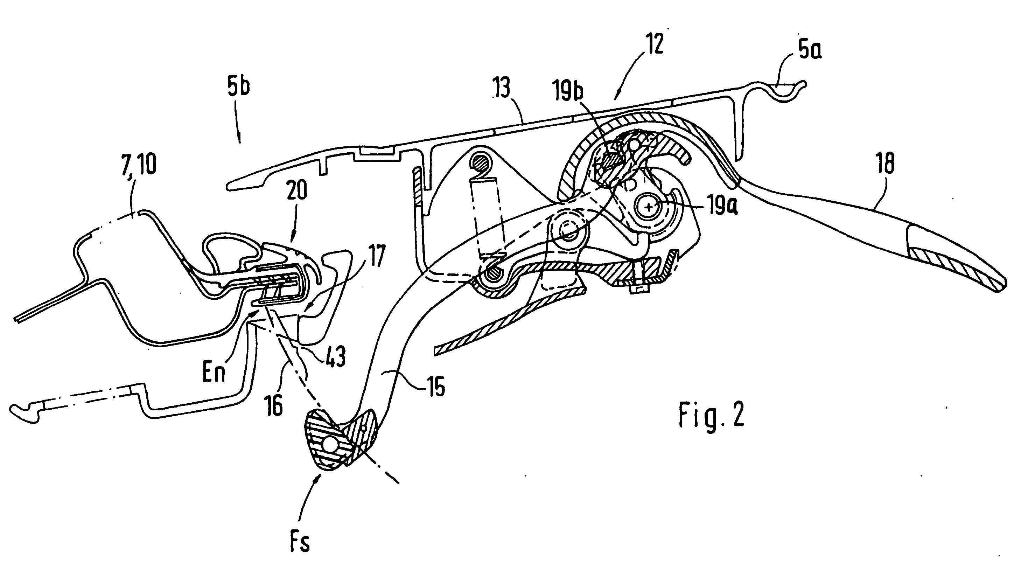

In Fig. 2, die einen Schnitt durch den Rahmen 7 im Bereich des Rahmenquerteils 10 und des vorderen Verdeckteils 13 zeigt, ist von der Verschlusseinrichtung 12 ein Riegelelement 15, beispielsweise mit einem Haken, zu sehen, welches aus einer Freigabestellung Fs in eine Verriegelungsposition am Bahneende En einer Bewegungsbahn 16 des Riegelelements 15 verlagert werden kann, in welcher Verriegelungsposition es einen am Rahmen 7 bzw. Querteil 10 vorgesehenen Anschlag 17 hintergreift. Das Riegelelement 15 ist über eine Handhabe 18 betätigbar, d. h. damit von der Freigabestellung Fs in die Verriegelungsposition und umgekehrt verschwenkbar. Hierfür kann die Handhabe 18 bzw. das Riegelelement 15 an einer am Verdeck 5 ortsfesten Drehachse 19a oder einer anderen Drehachse 19b der Verschlusseinrichtung 12 gelagert sein. Soll das Verdeck 5a in Schließstellung St verriegelt werden, so dass es mit seinem Ende 5b des vorderen Verdeckteils 13 an einer am Rahmen 7 angeordneten Dichtungseinrichtung 20 anliegt, wird die Handhabe 18 um ihre Drehachse 19a im Uhrzeigersinn verschwenkt, wodurch das Riegelelement 15 entlang der Bahn 16 bewegt wird und den Anschlag 17 hintergreift und so das Verdeck 5a mit seinem vorderen Verdeckteil 13 an die Dichtungseinrichtung 20 heranzieht. Derartige Verschlusseinrichtungen sind an sich bekannt, beispielsweise aus der DE 196 02 185 C1, so dass auf deren Funktion nicht weiter eingegangen wird.

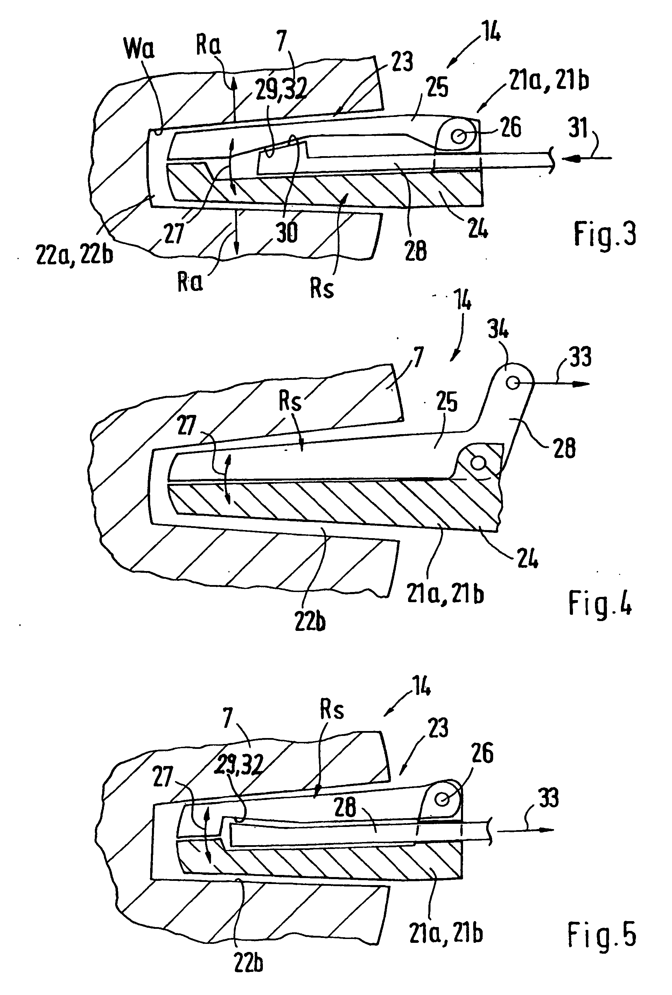

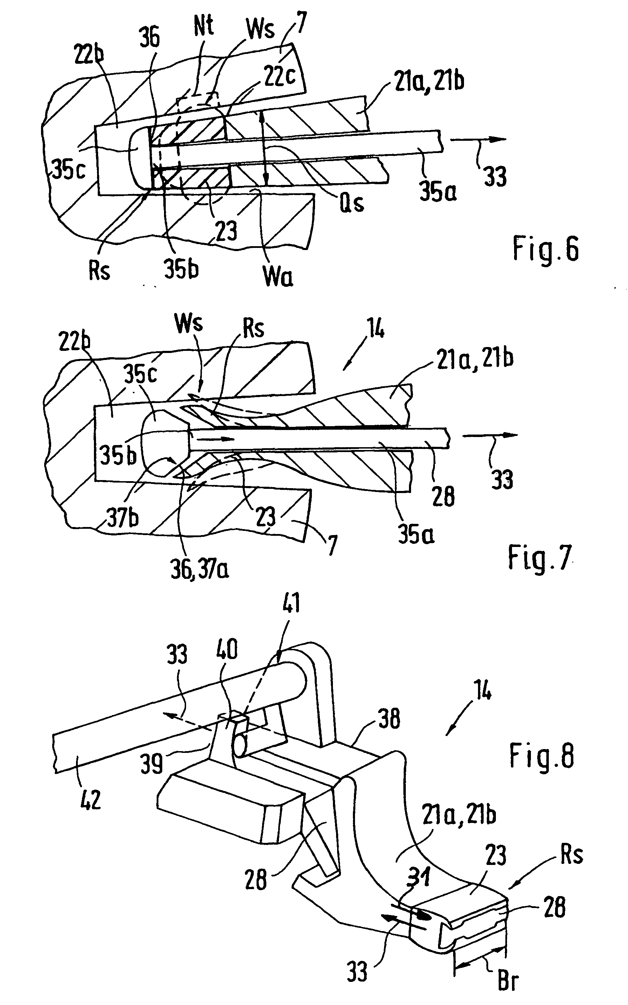

In den Fig. 3 bis 8 ist jeweils ein Ausführungsbeispiel der in Fig. 1 lediglich angedeuteten Zentriereinrichtung 14 ersichtlich. Jede der Zentriereinrichtungen 14 besitzt ein zwischen Rahmen 7 und Verdeck 5a wirkendes Zentrierelement 21a und Gegenzentrierelement 22a. Allen Ausführungsbeispielen der Zentriereinrichtungen 14 ist gemeinsam, dass das Zentrierelement 21a am Verdeck 5a, insbesondere an dessen Ende 5b überstehend, und das Gegenzentrierelement 22a am Rahmen 7 angeordnet ist. Selbstverständlich könnte dies auch umgekehrt sein. Das Zentrierelement 21a ist als Zentrierzapfen 21b realisiert, dessen Querschnitt eckig, oval und/oder kreisförmig sein kann. Entsprechend ist das Gegenzentrierelement 22a als Zapfenaufnahme 22b mit korrespondierendem Querschnitt ausgestattet. Ferner kann die Zapfenaufnahme 22b und/oder der Zentrierzapfen 21b konisch realisiert sein, also sich - in Fahrtrichtung Fr gesehen - verjüngen. Um ein Verkeilen bzw. Verklemmen des Zentrierzapfens 21b in der Zapfenaufnahme 22b und damit ein spielfreies Zentrieren des Verdecks 5a am Rahmen 7 zu erzielen, ist der im Wesentlichen unverformbare Zentrierzapfen 21b und/oder die im Wesentlichen unverformbare Zapfenaufnahme 22b mit einem verformbaren Abschnitt 23 ausgestattet, der im Querschnitt Qs veränderbar ist, so dass er in Wirkstellung Ws mit verändertem Querschnitt ohne Spiel an der Wand Wa der Zapfenaufnahme 22b unter Bildung eines Kraftschlusses anliegt. In den gezeigten Ausführungsformen besitzt der Zentrierzapfen 21b diesen Abschnitt 23, der im Querschnitt aufweitbar ausgestaltet ist. Bei einer nicht dargestellten Ausführungsvariante könnte die Zapfenaufnahme 22b diesen verformbaren Abschnitt aufweisen, der allerdings im Querschnitt verringerbar wäre, bspw. durch Kontraktion, so dass der Zentrierzapfen 21b vom verformbaren und in Wirkstellung vorliegenden Abschnitt fest umgriffen werden könnte. In jedem Fall wird jedoch zwischen Zentrierelement 21a und Gegenzentrierelement 22a ein Form- und/oder Kraftschluss erzielt, wenn der Abschnitt 23 in Wirkstellung Ws vorliegt. Für den Formschluss könnte beispielsweise an der Wand Wa eine Nut Nt (gestrichelt eingezeichnet in Fig. 6) vorgesehen sein, in die der Abschnitt 23 in Wirkstellung Ws eingreift. Durch das Formverändern des Anschnitts 23 in radialer Richtung Ra wird demgemäß bei einem Form- und/oder Kraftschluss ein spielfreies Zentrieren des Verdecks 5a am aufbauseitigen Rahmen 7 bzw. dessen Querteil 10 erreicht, wodurch eine Drehung in Pfeilrichtung Dr des Verdecks 5a um die Fahrzeuglängsachse FI bzw. um die Verschlusseinrichtung 12 relativ zum Rahmen 7 unterbunden wird. Das Verdeckvorderteil 13 ist mithin durch die Verschlusseinrichtung 12 fest gegen den Rahmen 7 gehalten und durch die Zentriereinrichtung 14 bezüglich der Fahrzeuglängsachse FI fixiert. Vorzugsweise wird der Abschnitt 23 über seinen Umfang gleichmäßig verformt, wodurch die Zentrierung weiter verbessert ist.

Im folgenden wird auf Unterschiede bei den Ausführungsbeispielen der Zentriereinrichtungen 14 gemäß Fig. 3 bis 8 eingegangen: In Fig. 3 ist das Zentrierelement 21a als zwei schwenkbar aneinander befestigte Klappenelemente 24 und 25 realisiert, die außerdem den verformbaren Abschnitt 23 bilden. Die gemeinsame Schwenkachse 26 der Klappenelemente 24, 25 liegt vorzugsweise außerhalb der Zapfenaufnahme 22b. Durch ein Spreizen bzw. Schwenken (Doppelpfeil 27) der beiden Klappenelemente 24 und 25 wird das Zentrierelement 21a innerhalb der Zentrierelementaufnahme 22 verklemmt. Für das Spreizen bzw. Auseinanderklappen der beiden Klappenelemente 24 und 25 ist ein Betätigungselement 28 zwischen den beiden Klappenelementen 24 und 25 verschiebbar oder verdrehbar aufgenommen. An der Innenseite 29 wenigstens eines der Klappenelemente 24 bzw. 25 und/oder an dem Umfang 30 des Betätigungselements 28 ist eine Auflaufschräge 32 vorgesehen, so dass ein Verschieben in Pfeilrichtung 31 (in Fahrtrichtung Fr) des Betätigungselements 28 die beiden Klappenelemente 24, 25 auseinander geklappt. Im Unterschied hierzu ist die Auflaufschräge 32 bei der Zentriereinrichtung 14 gemäß Fig. 5 so orientiert, dass ein Herausziehen in Pfeilrichtung 33 (entgegen der Fahrtrichtung) des Betätigungselements 28 den verformbaren Abschnitt 23 in Wirkstellung verlagert, wie diese durch den Doppelpfeil 27 angedeutet ist.

Fig. 4 zeigt ein weiteres Ausführungsbeispiel der Zentriereinrichtung 14, deren Zentrierelement 21a hier die zwei schwenkbar aneinander befestigten Klappenelemente 24 und 25 umfasst, jedoch eines der Klappenelemente 24 bzw. 25 als Betätigungselement 28 einen außen liegenden Betätigungsfortsatz 34 aufweist, der sich vom anderen Klappenelement 25 bzw. 24 weg erstreckt. Dieses Klappenelement 25 weist somit einen etwa L-förmigen Verlauf auf, so dass bei einer Kraftbeaufschlagung des Betätigungsfortsatzes 34 in Pfeilrichtung 33 der Abschnitt 23 entsprechend Doppelpfeil 27 aufgeweitet bzw. auseinander geklappt wird. Jedes Klappenelement 24 und 25 für sich kann zwar im Wesentlichen unverformbar sein, durch deren schwenkbewegliche Lagerung um die Achse 26 wird jedoch das Verklemmen bzw. Verkeilen innerhalb der Aufnahme 22b ermöglicht. Zusätzlich wäre es denkbar, die beiden Klappenelemente 24 und 25 mit einem elastisch verformbaren Abschnitt an ihrer der Zapfenaufnahme 22b zugewandten Fläche auszustatten, wie er im Folgenden beschrieben ist.

Bei den in Fig. 6 bis 8 dargestellten Ausführungsbeispielen der Zentriereinrichtung 14 ist der verformbare Abschnitt 23 aus einem elastisch verformbaren Material als Ring hergestellt, der am Zapfenende 22c des Zentrierzapfens 21b angeordnet sein kann und so einen Zapfenabschnitt bildet. Gemäß Fig. 6 und 7 weist das Betätigungselement 28 einen Schaft 35a auf, der innerhalb des Zentrierzapfens 21b liegt und an seinem Ende 35b einen Pilzzapfen 35c bzw. eine Scheibe besitzt, der bzw. die mit seiner bzw. ihrer Seite 36 dem Abschnitt 23 zugewandt ist. Nach Fig. 6 ist diese Seite 36 gerade und nach Fig. 7 als wenigstens eine Schräge 37a bzw. als Konus 37b ausgebildet, so dass beim Verschieben des Betätigungselements 28 in Pfeilrichtung 33 der aufweitbare Abschnitt 23 gespreizt (Fig. 7) und/oder durch eine Druckkraft im Querschnitt Qs vergrößert (Fig. 6) wird, wodurch er seine jeweils gestrichelt gezeichnete Wirkstellung Ws einnimmt, in der er den Querschnitt des Zentrierzapfens 21b überragt und mit der Zapfenaufnahme 22b zusammenwirkt. Bei Entlastung des Betätigungselements 28 nimmt der Abschnitt 23 wieder seine Ruhestellung Rs ein.

Fig. 8 zeigt ein weiteres Ausführungsbeispiel der Zentriereinrichtung 14. Der Zentrierzapfen 21b ist im Querschnitt eckig, insbesondere rechteckig, ausgeführt und trägt an seinem freien Ende den elastisch aufweitbaren Abschnitt 23. Das Betätigungselement 28 besitzt.hier im Querschnitt die Kontur eines Pilzzapfens, erstreckt sich jedoch über die gesamte Breite Br des aufweitbaren Abschnitts 23, so dass bei einer Verlagerung in Pfeilrichtung 33 das Betätigungselement 28 den Abschnitt 23 in Wirkstellung aufweitet, wie dies anhand der in den Fig. 6 und 7 dargestellten Wirkstellung Ws bereits erläutert wurde.

Das Betätigungselement 28 durchgreift den Zentrierzapfen 21b gemäß Fig. 8, der an einem Halter 38 befestigt ist, an dem ferner das Betätigungselement 28 verschieblich geführt ist. An dem dem Abschnitt 23 abgewandten Ende 39 des Betätigungselements 28 ist ein Kupplungselement 40 vorgesehen, an dem ein Antriebsmittel 41 angreift, so dass das Betätigungselement 28 am Halter 38 in Pfeilrichtung 31 und 33 verschiebbar ist, um den Abschnitt 23 in Wirkstellung Ws (Fig. 6 und 7) und zurück in Ruhestellung Rs verlagern zu können. Die Ruhestellung Rs des Abschnitts 23 ist in Fig. 3 bis 8 in durchgezogener Linie eingezeichnet. Das Antriebsmittel 41 ist vorzugsweise mit dem Antrieb der Verschlusseinrichtung 12 gekoppelt, beispielsweise mit der Handhabe 18, oder mit dem Riegelelement 15. Beispielsweise kann das Antriebsmittel 41 einen entsprechend am Verdeck 5a gelagerten Drehstab 42 umfassen, der mit der Drehachse 19a oder 19b antriebswirksam verbunden ist. Anstelle des Drehstabes 42 könnte auch eine flexible Welle zwischen der Drehachse 19a bzw. 19b und dem Kupplungselement 40 vorgesehen sein. Denkbar wäre es überdies, die Zentriereinrichtung 14 mit einer separaten Antriebseinrichtung für das Betätigungselement 28 auszustatten.

Bei sämtlichen in den Fig. 3 bis 8 gezeigten Ausführungsbeispielen der Zentriereinrichtung 14 kann die Verlagerung des Abschnitts 23 aus der Ruhestellung Rs in Wirkstellung Ws während des etwa letzten Bewegungsdrittels 43 (Fig. 2) ggf. auch früher oder später bis zur Verriegelungsposition des Riegelelements 15 erfolgen. Dadurch wird erreicht, dass das Zentrierelement 21a bereits nahezu vollständig mit dem Gegenzentrierelement 22a in Eingriff steht, bevor der Abschnitt 23 verformt wird. Somit wird ein dichtes Anliegen des vorderen Verdeckteils 13 an der Dichtungseinrichtung 20 gewährleistet.

## Patentansprüche

1. Verschluss- und Zentriereinrichtung (12, 14) für ein in Schließstellung (St) und Ablagestellung verlagerbares Verdeck (5a) für ein Kraftfahrzeug (1), insbesondere Personenwagen, welche Verschlusseinrichtung (12) wenigstens ein zwischen einem aufbauseitigen Rahmen (7) und dem Verdeck (5a) wirkendes bewegbares Riegelelement (15) aufweist und welche Zentriereinrichtung (14) zumindest ein zwischen dem Rahmen (7) und dem Verdeck (5a) wirkendes Zentrierelement (21 a) und Gegenzentrierelement (22a) besitzt, welches Zentrierelement (21a) und Gegenzentrierelement (22a) mit Abstand (Ab) zum Riegelelement (15) liegen, wobei das Zentrierelement (21a) einen verformbaren Abschnitt (23) aufweist, der in Schließstellung (St) des Verdecks (5a) in Wirkstellung (Ws) vorliegt und mit dem Gegenzentrierelement (22a) zusammenwirkt, **dadurch gekennzeichnet, dass** das Zentrierelement (21a) als Zentrierzapfen (21b) und das Gegenzentrierelement (22a) als Zapfenaufnahme (22b) ausgebildet ist, dass der verformbare Abschnitt (23) an dem Zentrierzapfen (21b) angeordnet ist und somit einen Zapfenabschnitt bildet, und dass der verformbare Abschnitt (23) im Querschnitt (Qs) aufweitbar ist.

2. Verschluss- und Zentriereinrichtung nach Anspruch 1, **dadurch gekennzeichnet, dass** der verformbare Abschnitt (23) des Zentrierelements (21a) im Querschnitt veränderbar ist.

3. Verschluss- und Zentriereinrichtung nach Anspruch 1, **dadurch gekennzeichnet, dass** der Zentrierzapfen (21b) und/oder die Zapfenaufnahme (22b) konisch ausgebildet sind/ist.

4. Verschluss- und Zentriereinrichtung nach Anspruch 1, **dadurch gekennzeichnet, dass** das Verformen des Abschnitts (23) mit der Bewegung des Riegelelements (15) der Verschlusseinrichtung (12) gekoppelt ist.

5. Verschluss- und Zentriereinrichtung nach einem der Ansprüche 1, 2 oder 4, **dadurch gekennzeichnet, dass** an dem verformbaren Abschnitt (23) ein Betätigungselement (28) zu Verformen des Abschnitts (23) angreift.

6. Verschluss- und Zentriereinrichtung nach einem der Ansprüche 1, 2, 4 oder 5, **dadurch gekennzeichnet, dass** der verformbare Abschnitt (23) zwei schwenkbeweglich aneinander befestigte Klappenelemente (24, 25) umfasst.

7. Verschluss- und Zentriereinrichtung nach einem der Ansprüche 5 oder 6, **dadurch gekennzeichnet, dass** eines der Klappenelemente (24, 25) und/oder das Betätigungselement (28) eine Auflaufschräge (32) für das Verformen des Abschnitts (23) besitzen.

8. Verschluss- und Zentriereinrichtung nach Anspruch 1, 5 und 7, **dadurch gekennzeichnet, dass** das Zentrierelement (21a) und der verformbare Abschnitt (23) von dem Betätigungselement (28) durchgriffen sind und die Auflaufschräge (32) an der Innenseite (29) des Abschnitts (23) angeordnet ist.

9. Verschluss- und Zentriereinrichtung nach Anspruch 6, **dadurch gekennzeichnet, dass** wenigstens eines der Klappenelemente (24, 25) einen Betätigungsfortsatz (34) als Betätigungselement (28) aufweist.

10. Verschluss- und Zentriereinrichtung nach einem der Ansprüche 12, 4 und 5, **dadurch gekennzeichnet, dass** der Abschnitt (23) elastisch verformbar ausgebildet ist.

11. Verschluss- und Zentriereinrichtung nach Anspruch 10, **dadurch gekennzeichnet, dass** der elastisch verformbare Abschnitt (23) das freie Ende (22c) des Zentrierelements (21a) bildet.

12. Verschluss- und Zentriereinrichtung nach Anspruch 5 und 10, **dadurch gekennzeichnet, dass** das Betätigungselement (28) das Zentrierelement (21a) und den elastisch verformbaren Abschnitt (23) durchgreift und an seinem freien Ende (35b) einen Pilzzapfen (35c) trägt, der den elastisch verformbaren Abschnitt (23) beaufschlagt.

13. Verschluss- und Zentriereinrichtung nach Anspruch 12, **dadurch gekennzeichnet, dass** der Pilzzapfen (35c) an seiner dem elastisch verformbaren Abschnitt (23) zugewandten Seite (36) konisch, gerade oder schräg ausgebildet ist.

14. Verschluss- und Zentriereinrichtung nach Anspruch 12 oder 13, **dadurch gekennzeichnet, dass** der Pilzzapfen (35c) den elastisch verformbaren Abschnitt (23) spreizt oder im Querschnitt (Qs) vergrößert.

15. Verschluss- und Zentriereinrichtung nach Anspruch 1, **dadurch gekennzeichnet, dass** das Zusammenwirken zwischen dem verformbaren Abschnitt (23) in Wirkstellung (Ws) und dem Gegenzentrierelement (22a) ein Kraft- und/oder Formschluss ist.

## Claims

1. A locking and centring device (12, 14) for a folding top (5a) for a motor vehicle (1), especially a passenger vehicle, said folding top (5a) being displaceable into a closed position (St) and a folded position, which locking device (12) has at least one movable locking member (15) acting between a body frame (7) and the folding top (5a), and which centring device (14) has at least one centring member (21a) and counter-centring member (22a) acting between the frame (7) and the folding top (5a), which centring member (21a) and counter-centring member (22a) are arranged with spacing (Ab) from the locking member (15), wherein the centring member (21a) has a deformable portion (23) which, in the closed position (St) of the folding top (5a), is in its operative position (Ws) and co-operates with the counter-centring member (22a), **characterised in that** the centring member (21a) is formed as a centring pin (21b) and the counter-centring member (22a) is formed as a pin recess (22b), **in that** the deformable portion (23) is arranged on the centring pin (21b) and thus forms a pin portion, and **in that** the deformable portion (23) has an expandable cross-section (Qs).

2. A locking and centring device according to claim 1, **characterised in that** the deformable portion (23) of the centring member (21a) has a variable cross-section.

3. A locking and centring device according to claim 1, **characterised in that** the centring pin (21b) and/or the pin recess (22b) are/is conically formed.

4. A locking and centring device according to claim 1, **characterised in that** the deformation of the portion (23) is coupled with the movement of the locking member (15) of the locking device (12).

5. A locking and centring device according to any one of claims 1, 2 and 4, **characterised in that** an actuating member (28) acts upon the deformable portion (23) for the deformation thereof.

6. A locking and centring device according to any one of claims 1, 2, 4 and 5, **characterised in that** the deformable portion (23) comprises two hinged members (24, 25) which are pivotably fastened to one another.

7. A locking and centring device according to either one of claims 5 and 6, **characterised in that** one of the hinged members (24, 25) and/or the actuating member (28) has a leading chamfer (32) for deformation of the portion (23).

8. A locking and centring device according to claims 1, 5 and 7, **characterised in that** the actuating member (28) extends through the centring member (21a) and the deformable portion (23), and the leading chamfer (32) is arranged on the inside (29) of the portion (23).

9. A locking and centring device according to claim 6, **characterised in that** at least one of the hinged members (24, 25) has an actuating extension (34) serving as an actuating member (28).

10. A locking and centring device according to any one of claims 1, 2, 4 and 5, **characterised in that** the portion (23) is elastically deformable.

11. A locking and centring device according to claim 10, **characterised in that** the elastically deformable portion (23) forms the free end (22c) of the centring member (21a).

12. A locking and centring device according to claims 5 and 10, **characterised in that** the actuating member (28) extends through the centring member (21a) and the elastically deformable portion (23) and, at its free end (35a), carries a mushroom pin (35c) which acts upon the elastically deformable portion (23).

13. A locking and centring device according to claim 12, **characterised in that** the mushroom pin (35c) is conical, straight or inclined on its side (36) facing the elastically deformable portion (23).

14. A locking and centring device according to claim 12 or 13, **characterised in that** the mushroom pin (35c) widens the elastically deformable portion (23) or increases its cross-section (Qs).

15. A locking and centring device according to claim 1, **characterised in that** the deformable portion (23) in its operative position (Ws) and the counter-centring member (22a) co-operate frictionally and/or positively.

## Revendications

1. Dispositif de verrouillage et de centrage (12, 14) pour un pavillon amovible (5a), pouvant être amené en position de fermeture (St) et en position de dépose, destiné à un véhicule automobile (1), en particulier un véhicule de tourisme, lequel dispositif de verrouillage (12) comporte au moins un élément de verrouillage (15) mobile activement entre un cadre (7) du côté montage et le pavillon (5a) et lequel dispositif de centrage (14) comporte au moins un élément de centrage (21a) et un élément de centrage complémentaire (22a), qui agissent entre le cadre (7) et le pavillon (5a), lesquels, élément de centrage (21a) et élément de centrage complémentaire (22a), sont situés à une distance (Ab) de l'élément de verrouillage (15), l'élément de centrage (21a) ayant un tronçon (23) déformable, qui est en position active (Ws) dans la position de fermeture (St) du pavillon (5a) et coopère avec l'élément de centrage complémentaire (22a), **caractérisé en ce que** l'élément de centrage (21a) est conçu sous forme de tenon de centrage (21b) et l'élément de centrage complémentaire (22a) est conçu sous forme de logement pour tenon (22b), **en ce que** le tronçon (23) déformable est agencé sur le tenon de centrage (21b) et forme donc un tronçon du tenon, et **en ce que** le tronçon (23) déformable peut être élargi en section (Qs).

2. Dispositif de verrouillage et de centrage selon la revendication 1, **caractérisé en ce que** le tronçon (23) déformable de l'élément de centrage (21a) est variable en section.

3. Dispositif de verrouillage et de centrage selon la revendication 1, **caractérisé en ce que** le tenon de centrage (21b) et/ou le logement pour tenon (22b) est/sont conique(s).

4. Dispositif de verrouillage et de centrage selon la revendication 1, **caractérisé en ce que** la déformation du tronçon (23) est couplée avec le mouvement de l'élément de verrouillage (15) du dispositif de verrouillage (12).

5. Dispositif de verrouillage et de centrage selon la revendication 1, 2 ou 4, **caractérisé en ce qu'**un élément de manoeuvre (28) entre en contact avec le tronçon (23) déformable en vue de déformer le tronçon (23).

6. Dispositif de verrouillage et de centrage selon la revendication 1, 2, 4 ou 5, **caractérisé en ce que** le tronçon (23) déformable comporte deux éléments articulés (24, 25) fixés de manière pivotante l'un à l'autre.

7. Dispositif de verrouillage et de centrage selon la revendication 5 ou 6, **caractérisé en ce que** l'un des éléments articulés (24, 25) et/ou l'élément de manoeuvre (28) comportent une rampe de contact (32) pour la déformation du tronçon (23).

8. Dispositif de verrouillage et de centrage selon les revendications 1, 5 et 7, **caractérisé en ce que** l'élément de manoeuvre (28) passe à travers l'élément de centrage (21a) et le tronçon (23) déformable, et la rampe de contact (32) est agencée sur la face intérieure (29) du tronçon (23).

9. Dispositif de verrouillage et de centrage selon la revendication 6, **caractérisé en ce qu'**au moins l'un des éléments articulés (24, 25) comporte une saillie de manoeuvre (34) formant l'élément de manoeuvre (28).

10. Dispositif de verrouillage et de centrage selon les revendications 1, 2, 4 et 5, **caractérisé en ce que** le tronçon (23) est conçu de manière élastiquement déformable.

11. Dispositif de verrouillage et de centrage selon la revendication 10, **caractérisé en ce que** le tronçon (23) élastiquement déformable forme l'extrémité libre (22c) de l'élément de centrage (21a).

12. Dispositif de verrouillage et de centrage selon les revendications 5 et 10, **caractérisé en ce que** l'élément de manoeuvre (28) passe à travers l'élément de centrage (21a) et le tronçon (23) élastiquement déformable et porte sur son extrémité libre (35b) un téton en forme de champignon (35c) qui sollicite le tronçon (23) élastiquement déformable.

13. Dispositif de verrouillage et de centrage selon la revendication 12, **caractérisé en ce que** le téton champignon (35c) est conique, rectiligne ou oblique sur son côté orienté vers le tronçon (23) élastiquement déformable.

14. Dispositif de verrouillage et de centrage selon la revendication 12 ou 13, **caractérisé en ce que** le téton champignon (35c) élargit le tronçon (23) élastiquement déformable ou l'agrandit en section (Qs).

15. Dispositif de verrouillage et de centrage selon la revendication 1, **caractérisé en ce que** la coopération entre le tronçon (23) déformable en position active (Ws) et l'élément de centrage complémentaire (22a) est un assemblage par adhérence ou par emboîtement.
